# EUROPÄISCHE PATENTSCHRIFT

(11) **EP 2 834 030 B1**
(45) Veröffentlichungstag und Bekanntmachung des Hinweises auf die Patenterteilung: **01.02.2017**
(21) Anmeldenummer: 12720060.8
(22) Anmeldetag: 03.04.2012
(51) Int. Cl.: B21K 1/76, B21J 5/02, F16D 3/41

(54) **VERFAHREN ZUR HERSTELLUNG EINES FLIEßGEPRESSTEN LAGERZAPFENS**
PROCESS FOR THE MANUFACTURE OF FORGED BEARING PINS
PROCÉDÉ DE FABRICATION DE TOURILLONS FORGÉS

(43) Veröffentlichungstag der Anmeldung: 11.02.2015
(73) Patentinhaber: ThyssenKrupp Presta Aktiengesellschaft, 9492 Eschen (LI)
(72) Erfinder: KEPPLER-OTT, Thomas, 6800 Feldkirch (AT)
(74) Vertreter: ThyssenKrupp Intellectual Property GmbH
(86) Internationale Anmeldenummer: PCT/AT2012/000085
(87) Internationale Veröffentlichungsnummer: WO 2013/149270

(56) Entgegenhaltungen:
- US-A- 4 580 432
- US-A- 5 119 663

## Beschreibung

Die Erfindung bezieht sich auf ein Verfahren zur Herstellung eines fließgepressten Lagerzapfens (1), der sich in eine Längsrichtung erstreckt und eine Mantelfläche (7), die eine Längsmittel-achse (9) des Lagerzapfens (1) umgibt, und eine den Lagerzapfen (1) an ei-nem freien Ende in axialer Richtung begrenzende Stirnfläche (8) aufweist, wobei der Lagerzapfen (1) in einem Presswerkzeug mittels mindestens eines Fließpressstempels (22, 23) fließgepresst wird und nach dem Fließpressen des Lagerzapfens (1) eine Nachbearbeitung des Lagerzapfens (1) zur Verbesserung der Zylindrizität des Lagerzapfens (1) zumindest über einen Abschnitt der Längserstreckung des Lagerzapfens (1) durchgeführt wird, wobei der Lagerzapfen (1) bei der Nachbearbeitung zumindest über einen an sein freies Ende anschließenden Abschnitt seiner Längserstreckung in einem Hohlraum angeordnet ist, der in radialer Richtung des Lagerzapfens (1) von einer die Mantelfläche (7) des Lagerzapfens (1) umgebenden Wandoberfläche (30) begrenzt wird, und ein in Längsrichtung des Lagerzapfens (1) verfahrbarer Nachbearbeitungsstempel (29) gegen das freie Ende des Lagerzapfens (1) verfahren und an die Stirnfläche (8) des Lagerzapfens (1) angepresst wird und dadurch eine plastische Verformung des Lagerzapfens (1) mit einem Materialfluss von Material des Lagerzapfens (1) bewirkt wird.. Weiters bezieht sich die Erfindung auf einen Lagerzapfen, der sich in eine Längsrichtung erstreckt und eine Mantelfläche, die eine Längsmittelachse des Lagerzapfens umgibt, und eine die axiale Erstreckung des Lagerzapfens an einem freien Ende des Lagerzapfens begrenzende Stirnfläche aufweist und dessen Mantelfläche zumindest über einen Abschnitt der Längserstreckung des Lagerzapfens zumindest im Wesentlichen zylindrisch ausgebildet ist.

Bei Lagerzapfen, insbesondere Lagerzapfen von Zapfenkreuzen (=Gelenkkreuzen) von Kardangelenken, besteht das generelle Problem, dass durch ein möglichst einfaches Herstellungsverfahren eine im Verhältnis zur Baugröße möglichst lange Lagerlänge erreicht werden soll. Gleichzeitig soll der Lagerzapfen eine, zumindest im Bereich der Lagerlänge, möglichst zylindrische Form aufweisen, d.h. seine Mantelfläche soll zumindest im Bereich eines Lagerabschnitts möglichst genau einem Zylindermantel, insbesondere einem Mantel eines Kreiszylinders, entsprechen, um eine gute Lauffläche für Wälzkörper, insbesondere Nadeln, auszubilden.

Zapfenkreuze (=Gelenkkreuze) mit Lagerzapfen, wobei die Längsmittelachsen der Lagerzapfen in einer Ebene liegen und die Längsmittelachsen von aufeinanderfolgenden Lagerzapfen jeweils rechtwinkelig zueinander stehen, oder Tripoden, bei denen in einer Ebene drei Lagerzapfen liegen, deren Längsmittelachsen jeweils einen Winkel von 120° miteinander einschließen, werden herkömmlicherweise durch Fließpressen, insbesondere Querfließpressen hergestellt. Die Herstellung eines Zapfenkreuzes durch Fließpressen, insbesondere Querfließpressen, geht beispielsweise aus der DE 2819167 A1 hervor. Die beiden Matrizen (=Formhälften) weisen rechtwinkelig zur Trennebene zwischen den Matrizen verlaufende, fluchtende zylindrische Kanäle auf, in welche ein Rohling eingesetzt wird. Von beiden Seiten her werden Pressstempel durch die zylindrischen Kanäle gegen den zylindrischen Rohling gefahren, wodurch ein Materialfluss des Materials des Rohlings in Aussparungen der Matrizen erfolgt, die an die zylindrischen Kanäle im Bereich der Trennebene anschließen und die Form der auszubildenden Zapfen aufweisen. Der die Zapfen ausbildende Materialfluss erfolgt somit quer zur Richtung, in welche die Pressstempel verfahren werden.

Die Stirnfläche am freien Ende des jeweiligen Lagerzapfens wird von einer Freiformfläche gebildet. Diese bildet eine in Richtung zum Zapfenende hin konvexe Erhebung der Stirnseite des Lagerzapfens. Der Übergang zwischen dieser Freiformfläche und der im Wesentlichen zylindrischen Mantelfläche des Lagerzapfens bildet das Ende des Lagerabschnitts der Mantelfläche und begrenzt somit die Lagerlänge des Lagerzapfens.

Um die Zylindrizität des Lagerzapfens im Bereich des Lagerabschnitts der Mantelfläche zu verbessern, wird üblicherweise eine Nachbearbeitung des Lagerzapfens durchgeführt. Hierzu kann beispielsweise eine Schleifoperation durchgeführt werden. Schleifoperationen haben allerdings den Nachteil, dass diese zeit- und kostenintensiv sind, sodass solche Schleifoperationen möglichst vermieden werden sollen. Aus der EP 0891825 B1 ist es bekannt, bei Lagerzapfen, hier insbesondere an Tripoden, zur Nachbehandlung nach dem Fließpressen eine Rolloperation durchzuführen. Bei dieser Rolloperation können, falls gewünscht, gleichzeitig um den Lagerzapfen umlaufende Nuten in die Mantelfläche des Lagerzapfens eingebracht werden.

Ein Verfahren der eingangs genannten Art geht aus der US 4,580,432 hervor. Ein Halbzeug wird in einer Längsausnehmung eines Fließpresswerkzeugs angeordnet und mittels Stempeln wird Material in Querausnehmungen des Werkzeugs gepresst. Gegen die Stirnflächen der in den Querausnehmungen ausgebildeten Lagerzapfen werden in der Folge Nachpressstempel gepresst. Zwei der Lagerzapfen des Zapfenkreuzes sind somit in den Längsausnehmungen und zwei der Lagerzapfen in den Querausnehmungen des Presswerkzeugs ausgebildet worden.

Die US 5,119,663 A beschreibt die Nachbearbeitung eines geschmiedeten Zapfenkreuzes. Auf einen jeweiligen Lagerzapfen wird hierbei eine Hülse aufgepresst. In der Folge werden ein Auswerfer und ein Stößel gegen den Lagerzapfen gepresst, wobei der Stößel eine Vertiefung im Lagerzapfen hinterlässt. In weiterer Folge wird der Stempel zurückgefahren und die Hülse wird abgezogen und der Auswerfer gibt den Lagerzapfen frei.

Aufgabe der Erfindung ist es einen Lagerzapfen bereitzustellen, dessen Mantelfläche über einen möglichst großen Teil der Längserstreckung des Lagerzapfens zumindest im Wesentlichen zylindrisch, insbesondere kreiszylindrisch, ausgebildet ist, vorzugsweise eine möglichst gute Zylindrizität aufweist, wobei der Lagerzapfen einfach herstellbar sein soll.

Erfindungsgemäß gelingt dies durch ein Verfahren zur Herstellung eines fließgepressten Lagerzapfens mit den Merkmalen des Anspruchs 1 bzw. durch einen Lagerzapfen mit den Merkmalen des Anspruchs 3.

Beim erfindungsgemäßen Verfahren zur Herstellung eines fließgepressten Lagerzapfens, bei welchem der Lagerzapfen in einem Presswerkzeug mittels mindestens einem Fließpressstempel fließgepresst wird, wird nach dem Fließpressen des Lagerzapfens eine Nachbearbeitung des Lagerzapfens durchgeführt, bei welcher der Lagerzapfen zumindest über einen an sein freies Ende anschließenden Abschnitt seiner Längserstreckung in einem Hohlraum angeordnet ist, der in radialer Richtung des Lagerzapfens von einer die Mantelfläche des Lagerzapfens umgebenden Wandoberfläche begrenzt wird. Bei der Nachbearbeitung wird ein in Längsrichtung des Lagerzapfens verfahrbarer Nachbearbeitungsstempel gegen das freie Ende des Lagerzapfens verfahren und mit einer so hohen Presskraft an die Stirnfläche des Lagerzapfens angepresst, dass eine plastische Verformung des Lagerzapfens mit einem Materialfluss von Material des Lagerzapfens bewirkt wird. Diese plastische Verformung des Lagerzapfens wirkt somit im Sinne einer Stauchung, d.h. die Gesamtlänge des Lagerzapfens wird reduziert. Die Reduzierung der Gesamtlänge des Lagerzapfens ist hierbei nur gering (insbesondere weniger als 10% der ursprünglichen Gesamtlänge des Lagerzapfens) und tritt im Wesentlichen im Bereich der Freiformfläche beim freien Zapfenende auf. Insbesondere kommt es in diesem Endabschnitt des Lagerzapfens zu einem in radialer Richtung gerichteten Materialfluss oder zu einem Materialfluss mit einer in radialer Richtung gerichteten Komponente. Weiters kommt es in diesem Endabschnitt des Lagerzapfens und/oder in einem daran unmittelbar anschließenden Abschnitt der Längserstreckung des Lagerzapfens in einem radialen Bereich des Lagerzapfens, welcher an die radiale Position der Mantelfläche des Lagerzapfens nach innen anschließt, zu einem zum freien Ende des Lagerzapfens gerichteten axialen Materialfluss oder zu einem Materialfluss mit einer in diese Richtung gerichteten Komponente. Durch diesen Materialfluss kommt es zu einer Vergrößerung der Länge des zumindest im Wesentlichen zylindrischen Abschnitts des Lagerzapfens.

Die Mantelfläche im Bereich des zumindest im Wesentlichen zylindrischen Abschnitts des Lagerzapfens oder zumindest die Mantelfläche im Bereich eines Teils der axialen Längserstreckung dieses zumindest im Wesentlichen zylindrischen Abschnitts des Lagerzapfens bildet einen Lagerabschnitt der Mantelfläche, der somit durch diese plastische Verformung des Lagerzapfens vergrößert werden kann. "Zumindest im Wesentlichen zylindrisch" bedeutet hierbei, dass der Lagerzapfen bzw. seine Mantelfläche in diesem Abschnitt zylindrisch, insbesondere kreiszylindrisch, ausgebildet ist, abgesehen von herstellungsbedingten Ungenauigkeiten und Toleranzen. So beträgt die Neigung der Mantelfläche, also ihr Abfall oder Anstieg in Längsrichtung des Lagerzapfens gegenüber der Mittelachse des Lagerzapfens günstigerweise weniger als 0,5°, bevorzugterweise weniger als 0,2°. Die Abweichungen im Durchmesser der Mantelfläche von der Zylinderform betragen über den Umfang günstigerweise weniger als 0,5%, vorzugsweise weniger als 0,05% des Durchmessers.

Bei der plastischen Verformung mit dem Nachpressstempel kann es zusätzlich zum Materialfluss im Bereich der Freiformfläche am Zapfenende und im unmittelbar daran anschließenden Bereich auch zu einem gewissen Materialfluss in anderen Bereichen des Lagerzapfens kommen. Ein solcher, insbesondere zumindest im Wesentlichen radialer Materialfluss kann insbesondere in solchen Bereichen der Längserstreckung des Lagerzapfens bewirkt werden, in denen vor dem Anpressen des Nachbearbeitungsstempels ein Spalt zwischen der Mantelfläche des Lagerzapfens und der diese umgebenden Wandoberfläche des Hohlraums vorliegt, in welchem der Lagerzapfen bzw. zumindest ein an das freie Ende des Lagerzapfens anschließender Abschnitt der Längserstreckung des Lagerzapfens angeordnet ist, wenn der Nachbearbeitungsstempel an die Stirnfläche des Lagerzapfens angepresst wird. Auf diese Weise kann auch eine Beeinflussung der insgesamten Zapfenform erreicht werden. So kann insbesondere ein Härteverzug, zu dem es beim Härteprozess nach dem Formgebungsprozess kommt, vorgehalten werden, d.h. nach dem Härten ist durch ein solches Vorhalten des Härteverzugs die Zylindrizität der Mantelfläche zumindest im Lagerabschnitt der Mantelfläche besser als vor dem Härten. Ein solches Vorhalten des Härteverzugs kann in Bezug auf die Formgebung in Längsrichtung des Lagerzapfens und/oder in Umfangsrichtung des Lagerzapfens erfolgen. Zu Härteverzügen kann es beispielsweise durch unterschiedliche Eigenspannungsvorbelastungen in verschiedenen Bereichen des Lagerzapfens kommen, welche sich im Formprozess des Lagerzapfens ausbilden.

Bei einem erfindungsgemäßen Lagerzapfen weist die Stirnfläche des Lagerzapfens einen konkaven Bereich auf, der eine in Längsrichtung des Lagerzapfens vorspringende Erhebung umgibt. Insbesondere umgibt dieser konkave Bereich die Erhebung vollständig, also ringförmig.

Der konkave Bereich ist dabei durch eine Umformung gebildet. Bevorzugt ist der konkave Bereich durch eine freie, nicht in einer Werkzeugform gebundenen, Umformung gebildet, d.h. er ist eine Freiformfläche. Es ist jedoch denkbar und möglich durch eine zusätzliche konvexe Formgebung des Nachbearbeitungsstempels diesen Werkstofffluss noch zu unterstützen. Allerdings sollte bevorzugt stets eine freie nicht werkzeuggebundene Umformung vorhanden bleiben, die zumindest einen Teil der konkaven Form ausbildet, d.h. zumindest ein Teil des konkaven Bereichs ist eine Freiformfläche. In jedem Fall ist der konkave Bereich nicht durch eine mechanische Bearbeitung, beispielsweise durch Drehen, Fräsen oder Schleifen, gebildet.

Mit Vorteil sind im Längsmittelschnitt gesehen zwischen der Mantelfläche und der Stirnfläche oder der Funktionskontur und der Stirnfläche sowie im Bereich der Stirnfläche zwei Abschnitte vorhanden, deren Konturen in Radien einbeschrieben werden können, wovon ein erster Radienmittelpunkt mit einem ersten Radius innerhalb des Funktionsteils und ein zweiter Radienmittelpunkt mit einem zweiten Radius außerhalb des Funktionsteils angeordnet ist. Dabei ist zu bevorzugen, wenn der Wert des ersten Radius kleiner als ein Fünftel, weiter bevorzugt kleiner als ein Zehntel, des Wertes des zweiten Radius beträgt. Darüberhinaus ist es zu bevorzugen, wenn der Wert des zweiten Radius kleiner als das vierhundertfache, besonders bevorzugt kleiner als das zweihundertfache, im Vergleich zum Wert des ersten Radius beträgt.

In einer vorteilhaften Ausbildung weist die Stirnfläche des Lagerzapfens in diesem konkaven Bereich eine Vertiefung gegenüber einem Umfangsrand der Stirnfläche des Lagerzapfens auf. Im Längsmittelschnitt durch den Lagerzapfen gesehen, erstreckt sich der Lagerzapfen im Bereich dieser Vertiefung somit weniger weit in die zum freien Ende des Lagerzapfens hin gerichtete Längsrichtung als im Bereich des Umfangsrandes der Stirnfläche, welcher bündig zum zylindermantelförmigen Lagerabschnitt der Mantelfläche des Lagerzapfens liegt. Vorzugsweise schließt der Lagerabschnitt der Mantelfläche mit diesem Umfangsrand der Stirnfläche des Lagerzapfens ab (=endet dort), sodass also die Mantelfläche in Richtung zum freien Ende des Lagerzapfens bis zu diesem Umfangsrand der Stirnfläche zumindest im Wesentlichen zylindrisch, insbesondere kreiszylindrisch ausgebildet ist.

Durch die erfindungsgemäße Ausbildung des Lagerzapfens kann somit eine Vergrößerung der axialen Erstreckung der zumindest im Wesentlichen zylindermantelförmigen Mantelfläche bzw. des zumindest im Wesentlichen zylindermantelförmigen Lagerabschnitts der Mantelfläche des Lagerzapfens erreicht werden. Weiters können günstigerweise Abweichungen von der Zylindrizität verringert werden. Im Wesentlichen meint dabei, dass die Formabweichungen unter 0,1mm, bevorzugt unter 0,05mm und noch mehr bevorzugt unter 0,01 mm, bezogen auf den Zapfendurchmesser im Bereich von 5mm bis 20mm betragen.

Die Nachbearbeitung des Lagerzapfens mit der plastischen Verformung durch den Nachbearbeitungsstempel erfolgt nachdem der Lagerzapfen aus dem Presswerkzeug, in welchem das Fließpressen des Lagerzapfens erfolgt ist, herausgenommen worden ist. Es wird dann eine Hülse auf den Lagerzapfen aufgeschoben, welche die Wandoberfläche aufweist, die die Mantelfläche des Lagerzapfens zumindest über den an das freie Ende des Lagerzapfens anschließenden Abschnitt der Längserstreckung des Lagerzapfens umgibt, wenn der Nachbearbeitungsstempel an die Stirnfläche des Lagerzapfens angepresst wird und eine plastische Verformung des Lagerzapfens durchgeführt wird.

Vorteilhafterweise kann durch das Aufschieben der Hülse auf den Lagerzapfen von der Hülse ein Materialfluss von Material des Lagerzapfens bewirkt werden. Es wird also beim Aufschieben der Hülse ein Kalibrierschritt des Lagerzapfens durchgeführt. Durch diesen Kalibrierschritt kann insbesondere die Rundheit des Lagerzapfens verbessert werden, also Abweichungen des Querschnitts von der Kreisform können verringert werden. Durch diesen Materialfluss kommt es zu einer gewissen Reduzierung des Lagerzapfens in seinem Durchmesser, zumindest bereichsweise.

Durch das Abziehen der Hülse, welches nach der plastischen Verformung des Lagerzapfens durch den Nachbearbeitungsstempel erfolgt, wird ein Materialfluss von Material des Lagerzapfens bewirkt. Es wird also beim Abziehen der Hülse ein Kalibrierschritt des Lagerzapfens durchgeführt. Insbesondere kann dadurch eine Glättung der Mantelfläche zumindest im Lagerabschnitt erreicht werden. Durch diesen Materialfluss kommt es zu einer gewissen Reduzierung des Lagerzapfens in seinem Durchmesser, zumindest bereichsweise. Mit Vorteil bleibt der Nachbearbeitungsstempel während des Abziehens der Hülse unter Druck auf dem Zapfenende angelegt. Dabei ist es besonders vorteilhaft, wenn die Druckkraft beim Abziehen der Hülse gleichmäßig reduziert wird, am besten geregelt.

Ein Kalibrieren, wie es im Sinne dieser Schrift verwendet wird, bedeutet ein mit umformtechnischen Mitteln auf Maß Bringen.

Weitere Vorteile und Einzelheiten der Erfindung werden im Folgenden anhand der beiliegenden Zeichnung erläutert. In der Zeichnung zeigen:
Fig. 1 einen Längsmittelschnitt durch einen Lagerzapfen gemäß dem Stand der Technik, der über ein Nadellager gegenüber einer Gelenkgabel drehbar gelagert ist;
Fig. 2 einen Längsmittelschnitt durch einen Lagerzapfen gemäß der Erfindung, der über ein Nadellager gegenüber einer Gelenkgabel drehbar gelagert ist;
Fig. 3 eine schematische Darstellung eines Presswerkzeuges zum Fließpressen eines Zapfenkreuzes mit vier Lagerzapfen, teilweise im Schnitt, mit eingelegtem Rohling;
Fig. 4 eine Darstellung entsprechend Fig. 3, nach dem Pressvorgang;
Fig. 5 eine Ansicht des aus dem Presswerkzeug entnommenen Zapfenkreuzes;
Fig. 6 bis 9 schematische Darstellungen von Arbeitsschritten der Nachbearbeitung eines Lagerzapfens des Zapfenkreuzes, teilweise im Schnitt;
Fig. 10 eine Ansicht des Zapfenkreuzes mit den nachbearbeiteten Lagerzapfen;
Fig. 11 eine schematische Darstellung zur Erläuterung des konkaven Bereichs.

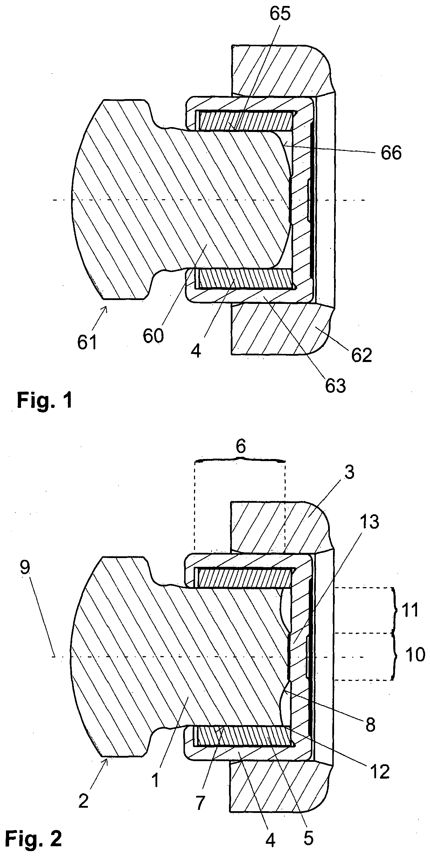

Fig. 1 zeigt ein Ausführungsbeispiel eines in herkömmlicher Weise ausgebildeten Lagerzapfens 60, der Teil eines Zapfenkreuzes 61 für ein Universalgelenk ist. Der Lagerzapfen 60 ist gegenüber einer Gelenkgabel 62 drehbar gelagert. Hierzu ist in der Öffnung der Gelenkgabel eine Lagerhülse 63 eingesetzt und zwischen der Lagerhülse 63 und dem Lagerzapfen 60 sind Nadeln 64 eingesetzt, die einerseits an der Mantelfläche 65 des Lagerzapfens 60, andererseits an der Innenseite der Lagerhülse 63 abrollen, wodurch ein Nadellager ausgebildet wird. Die Mantelfläche 65 ist zumindest in dem Abschnitt ihrer axialen Erstreckung, in welchem die Nadeln 64 an ihr abrollen, im Wesentlichen zylindrisch ausgebildet.

Am freien Ende des Lagerzapfens 60 geht die Mantelfläche 65 in eine Stirnfläche 66 über, die den Lagerzapfen 60 in axialer Richtung begrenzt. Die Stirnfläche 66 ist konvex nach außen gewölbt (in axialer Richtung), wodurch eine stirnseitige Erhebung des Lagerzapfens ausgebildet wird. In der gezeigten Ausführungsform ist in einem zentralen Bereich der Stirnfläche eine kleinere Vertiefung vorhanden, in welche ein axialer Vorsprung der Lagerhülse 63 eingreift, wodurch der Lagerzapfen 60 in axialer Richtung abgestützt wird. Der konvex gewölbte Bereich der Stirnfläche 66 wird von einer beim Fließpressen des Zapfenkreuzes 61 ausgebildeten Freiformfläche gebildet. Im Bereich der Vertiefung in der Stirnfläche 66 ist im Formhohlraum des Presswerkzeuges eine Begrenzungsfläche angeordnet, an die das Material des Zapfenkreuzes beim Fließpressen anläuft. Auch Vertiefungen in Form von Teilen von Kugelflächen werden auf diese Weise bei herkömmlichen Lagerzapfen stirnseitig ausgebildet.

Ein in erfindungsgemäßer Weise ausgebildeter Lagerzapfen geht aus Fig. 2 hervor. Der Lagerzapfen 1 kann Teil eines Zapfenkreuzes 2 für ein Kardangelenk sein. Beispielsweise kann der Lagerzapfen aber auch Teil einer Tripode oder eines anderen drehbar zu lagernden Bauteils sein. Im gezeigten Ausführungsbeispiel ist der Lagerzapfen 1 drehbar gegenüber einer Gelenkgabel 3 gelagert. In einer Öffnung der Gelenkgabel 3 ist hierzu eine Lagerhülse 4 angeordnet, wobei zwischen der Lagerhülse 4 und dem Lagerzapfen 1 Wälzkörper 5 liegen. Diese sind hier in Form von Nadeln ausgebildet. Zusätzlich oder stattdessen könnten beispielsweise auch Kugeln oder auch eine Gleitlagerung vorgesehen sein. Die Wälzkörper 5 rollen einerseits an der Innenseite der Lagerhülse 4, andererseits an einem Lagerabschnitt 6 der Mantelfläche 7 des Lagerzapfens 1 ab.

Die Mantelfläche 7 umgibt die Längsmittelachse 9 des Lagerzapfens 1. Die Richtung der Längserstreckung des Lagerzapfens 1 liegt parallel zu dieser Längsmittelachse 9.

Zumindest im Bereich des Lagerabschnitts 6 ist die Mantelfläche 7 zumindest im Wesentlichen zylindrisch (=zylindermantelförmig), insbesondere kreiszylindrisch. Die Zylinderachse ist hierbei die Längsmittelachse 9. Die Zylinderform kann sich hierbei über den Lagerabschnitt 6 hinaus ausdehnen. "Im Wesentlichen zylindrisch" bedeutet hierbei zylindrisch, abgesehen von Ungenauigkeiten oder Toleranzen bei der Herstellung, wie bereits in der Beschreibungseinleitung ausgeführt worden ist.

Im Bereich seines freien Endes besitzt der Lagerzapfen 1 stirnseitig eine Stirnfläche 8, die den Lagerzapfen 1 in axialer Richtung, also in Richtung seiner Längsmittelachse 9 begrenzt. Die Abgrenzung zwischen der Mantelfläche 7 und der Stirnfläche 8 kann beispielsweise dort angesetzt werden, wo die Oberflächennormale auf den Lagerzapfen 1, wenn man ausgehend von einem vom freien Ende abgelegenen axial mittleren Bereich des Lagerzapfens 1 in Richtung zum freien Ende des Lagerzapfens 1 geht, einen Winkel von 45° zur Längsmittelachse 9 erstmals unterschreitet.

In einem mittleren Bereich weist die Stirnfläche 8 eine gegenüber einem umliegenden Bereich in axialer Richtung vorspringende Erhebung 10 auf. Im Längsmittelschnitt (bzw. in Seitenansicht des Lagerzapfens 1) gesehen erstreckt sich der Lagerzapfen 1 im Bereich der Erhebung 10 somit weiter in die von seiner Basis zu seinem freien Ende weisende axiale Richtung als in einem der Erhebung benachbarten Bereich. Bevorzugterweise liegt die Stelle der größten axialen Erstreckung des Lagerzapfens 1 in diese axiale Richtung im Bereich der Erhebung 10. Die Erhebung 10 wird von einem konkaven Bereich 11 der Stirnfläche 8 vollständig, also ringförmig umgeben. Im konkaven Bereich 11 ist die Stirnfläche 8 bezogen auf die axiale Richtung nach innen gewölbt. Hierbei weist die Stirnfläche 8 in der dargestellten Ausführungsform im konkaven Bereich 11 eine Vertiefung gegenüber einem Umfangsrand 12 der Stirnfläche auf (der Lagerzapfen erstreckt sich im Bereich dieser Vertiefung also weniger weit in die von der Basis des Lagerzapfens 1 zu seinem freien Ende weisende axiale Richtung als der Umfangsrand). Bei diesem Umfangsrand 12 schließt die Stirnfläche 8 an den zylindermantelförmig ausgebildeten Lagerabschnitt 6 der Mantelfläche 7 des Lagerzapfens 1 an.

Die Erhebung 10 kann wie dargestellt eine mehr oder weniger stark ausgeprägte zentrale Vertiefung aufweisen. In diese kann ein Vorsprung 13 der Lagerhülse 4 eingreifen, welcher den Lagerzapfen 1 in axialer Richtung abstützt. Eine Abstützung des Lagerzapfens 1 in axialer Richtung kann aber im Bereich der Erhebung 10 auch erfolgen, ohne dass diese mit einer Vertiefung ausgebildet ist. Es kann sogar eine zusätzliche, beispielsweise zapfenartige, Erhebung vorgesehen sein.

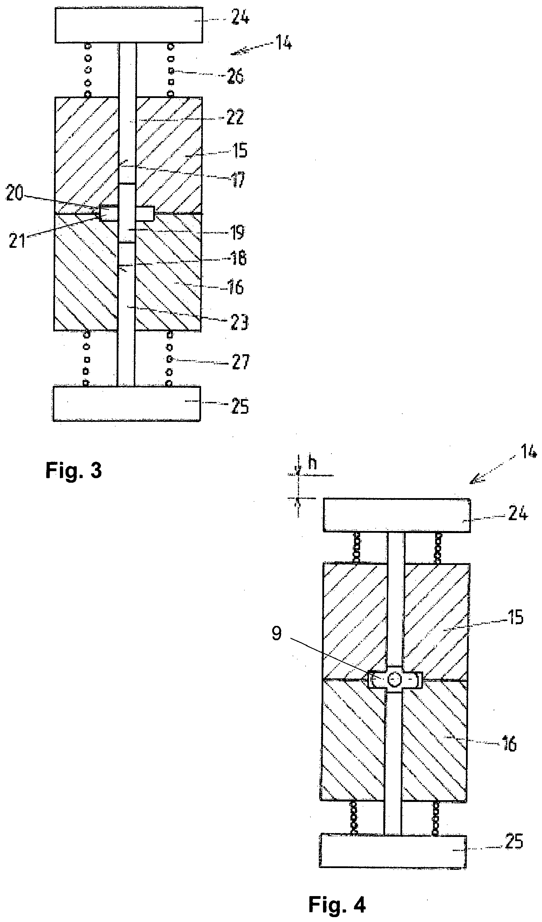

Die Herstellung eines erfindungsgemäßen Lagerzapfens wird im Folgenden für ein erstes Ausführungsbeispiel der Erfindung anhand der Fig. 3 bis 10 erläutert.

Zunächst erfolgt das Fließpressen des Lagerzapfens 1 bzw. eines Bauteils, hier eines Zapfenkreuzes 2, welches mindestens einen in erfindungsgemäßer Weise auszubildenden Lagerzapfen 1 aufweist. Im Ausführungsbeispiel besitzt das auszubildende Zapfenkreuz 2 vier Lagerzapfen 1, deren Längsmittelachsen 9 in einer gemeinsamen Ebene liegen, wobei die Längsmittelachse 9 von in Umfangsrichtung aufeinanderfolgenden Lagerzapfen 1 jeweils rechtwinkelig zueinander stehen.

Das Fließpressen erfolgt in einem Presswerkzeug 14, welches erste und zweite Matrizen 15, 16 aufweist. Die Matrizen 15, 16 weisen jeweils eine rechtwinkelig zur Trennebene zwischen den Matrizen 15, 16 stehende Bohrung 17, 18 auf, wobei diese Bohrungen 17, 18 miteinander fluchten und einen durchgehenden Kanal ausbilden. In einem zentralen Teil dieses Kanals ist ein zylindrischer Rohling 19 eingelegt, der sich über einen Teil seiner Ausdehnung in die Bohrung 17 und über den anderen Teil seiner Ausdehnung in die Bohrung 18 erstreckt.

Im Bereich ihrer Trennebene besitzen die Matrizen 15, 16 Aussparungen 20, 21, die zusammen Hohlräume mit zylindrischen Mantelflächen ausbilden. Die Längsmittelachsen dieser Hohlräume liegen in einer gemeinsamen Ebene und es sind insgesamt vier Hohlräume vorhanden, wobei die Längsmittelachsen von in Umfangsrichtung aufeinanderfolgenden Hohlräumen jeweils rechtwinkelig aufeinander stehen (nur zwei dieser Hohlräume sind in der Schnittdarstellung der Matrizen 15, 16 von Fig. 3 sichtbar). In die Bohrungen 17, 18 sind Fließpressstempel 22, 23 eingeführt, zwischen denen der Rohling 19 liegt. Die Fließpressstempel 22, 23 sind jeweils an einer Trägerplatte 24, 25 angebracht, wobei zwischen den Trägerplatten 24, 25 und den Matrizen 15, 16 Druckfedern 26, 27 angeordnet sind.

Durch das Zusammendrücken der Trägerplatten 24, 25 um den Weg h wird der Rohling 19, wenn die Fließpresstempel 22, 23 zuvor beidseitig am Rohling 19 angelegen sind, ebenfalls um den Betrag h gestaucht. Hierbei wird Material des Rohlings 19 in die Aussparungen 20, 21 gepresst, wobei das Material quer zur Bewegungsrichtung der Fließpressstempel 22, 23 fließt. Dadurch werden die Lagerzapfen 1 gebildet. Die freien Enden der Lagerzapfen 1 weisen hierbei einen Abstand von den Begrenzungen der Aussparungen 20, 21 auf, sodass sich im Bereich der freien Enden der Lagerzapfen 1 Freiformflächen ausbilden. Diese bilden die Stirnflächen 8 der Lagerzapfen 1 nach dem Fließpressvorgang.

Die Herstellung entspricht insoweit dem Stand der Technik, beispielsweise wie in der in der Beschreibungseinleitung genannten DE 2 819 167 A1 beschrieben.

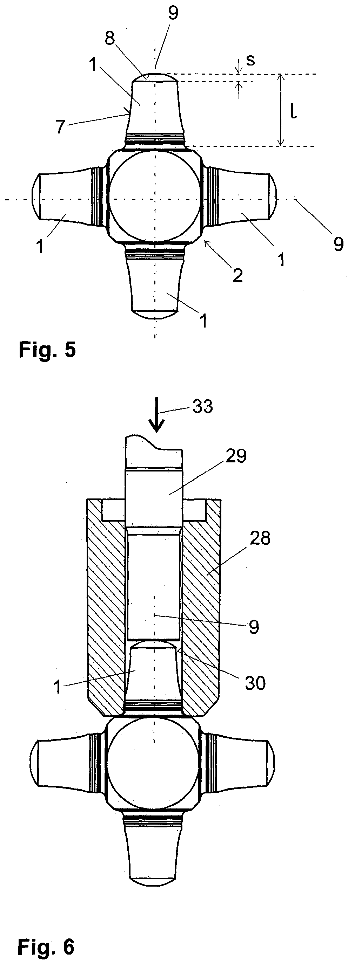

Das aus dem Fließpresswerkzeug herausgenommene Zapfenkreuz 2 ist in Fig. 5 dargestellt. Für die Lagerzapfen 1 ist ihre jeweilige Längsmittelachse 9 eingezeichnet. Die Mantelfläche 7 des fließgepressten Lagerzapfens 1 umgibt die Längsmittelachse 9.

Die Mantelflächen 7 der fließgepressten Lagerzapfen 1 sind in Fig. 5 mit einer von der Zylinderform abweichenden Form dargestellt und zwar derart, dass sich die Lagerzapfen 1 zu ihren freien Enden hin verjüngen, im Wesentlichen konisch. Die Abweichung von der Zylinderform ist hierbei zur Veranschaulichung stark übertrieben dargestellt. Beispielsweise kann die Konizität im Bereich von 0,2° liegen.

Die axialer Erstreckung s der von der Stirnfläche gebildeten Erhebung kann im Bereich von 1-2mm liegen, während die gesamte Länge I des Lagerzapfens beispielsweise im Bereich von 5mm bis 15mm liegen kann.

In der Folge wird eine Nachbearbeitung der Lagerzapfen 1 durchgeführt, wobei die Nachbearbeitung anhand eines der Lagerzapfen 1 im Folgenden näher erläutert wird:

Zunächst wird eine Hülse 28 in axialer Richtung des Lagerzapfens vom freien Ende des Lagerzapfens her auf diesen aufgeschoben. Zumindest ein an das freie Ende des Lagerzapfens 1 anschließender axialer Abschnitt des Lagerzapfens 1, im Ausführungsbeispiel der gesamte Lagerzapfen 1, liegt dann im inneren Hohlraum dieser Hülse 28. Dieser innere Hohlraum der Hülse 28 wird somit von der inneren Wandoberfläche 30 der Hülse umgeben.

In der Folge wird ein in die Hülse 28 bereits ragender oder in diese eingeführter Nachbearbeitungsstempel 29 in axialer Richtung der Hülse 28 bzw. des Lagerzapfens 1 verfahren, bis er an das freie Ende des Lagerzapfens 1 anläuft. Dieser Zustand ist in Fig. 6 dargestellt (der Pfeil 33 zeigt die Verschieberichtung). Es könnte auch vorgesehen sein, die Hülse 28 zusammen mit dem Nachbearbeitungsstempel 29 in Richtung des Pfeils 33 axial auf den Lagerzapfen 1 aufzuschieben, bis der Nachbearbeitungsstempel 29 an das freie Ende des Lagerzapfens 1 anläuft, womit das Ende der gemeinsamen axialen Verschiebung der Hülse 28 und des Nachbearbeitungsstempels 29 erreicht ist.

In Fig. 6 ist zwischen dem an die Stirnfläche 8 anschließenden Abschnitt der Mantelfläche 7 und der die Mantelfläche 7 umgebenden Wandoberfläche 30 der Hülse 28 ein Spalt dargestellt. Die Hülse 28 hätte damit beim Aufschieben auf den Lagerzapfen 1 keine Formgebung des Lagerzapfens 1 durchgeführt. Mit Vorzug ist es aber auch möglich, den Durchmesser der Hülse 28 so zu wählen, dass es beim Aufschieben der Hülse 28 auf den Lagerzapfen 1 in einer an die Mantelfläche 7 anschließenden Schicht zu einem Materialfluss von Material des Lagerzapfens 1 kommt, d.h. es wird bereits beim Aufschieben der Hülse 28 ein erster Kalibrierschritt des Lagerzapfens 1 durchgeführt, beispielsweise um die Rundheit des Lagerzapfens 1 zu verbessern.

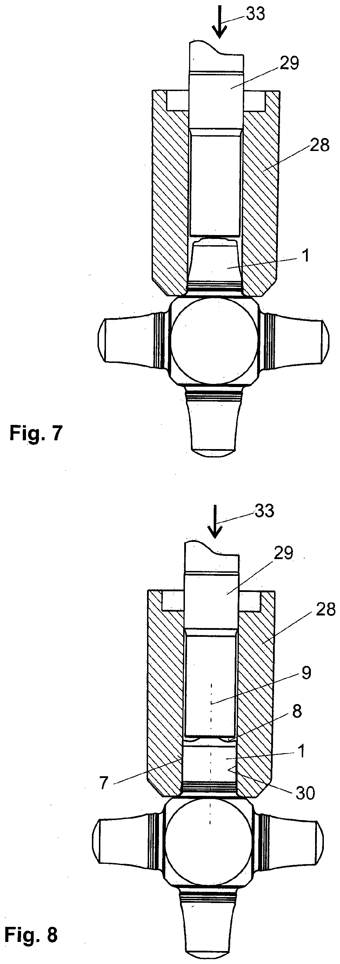

In der Folge wird der Nachbearbeitungsstempel 29 mit einer so hohen Kraft gegen das freie Ende des Lagerzapfens 1 gepresst (in Richtung des Pfeils 33), dass es zu einem Materialfluss von Material des Lagerzapfens kommt. Fig. 7 zeigt ein Zwischenstadium dieses Nachpressvorgangs und Fig. 8 zeigt den Zustand am Ende dieses Nachpressvorgangs. Durch diesen Nachpressvorgang wird der Lagerzapfen 1 vor allem im Bereich des Zapfenendes gestaucht. Durch dieses Stauchen kommt es zu einem Materialfluss von Material des Lagerzapfens in radialer Richtung, insbesondere im Bereich der gewölbten Stirnfläche 8. Aber auch gegebenenfalls vor dem Nachpressvorgang zwischen der Mantelfläche 7 und der Wandoberfläche 30 vorhandene Spaltbereiche können dadurch geschlossen werden. Im Bereich des äußeren Umfangs des Lagerzapfens 1, in einer an die Wandoberfläche 30 anschließenden Schicht kommt es weiters im Endabschnitt des Lagerzapfens 1 zu einem Materialfluss in axialer Richtung, die der Richtung, in welche der Nachbearbeitungsstempel 29 gegen das Zapfenende gepresst wird, entgegengerichtet ist. Es kommt dadurch zu einer Verlängerung des zumindest im Wesentlichen zylindrischen Teils der Mantelfläche 7. Der Lagerabschnitt 6 der Mantelfläche 7, über welchen diese zur Lagerung von Wälzkörpern 5 dient, kann damit verlängert werden.

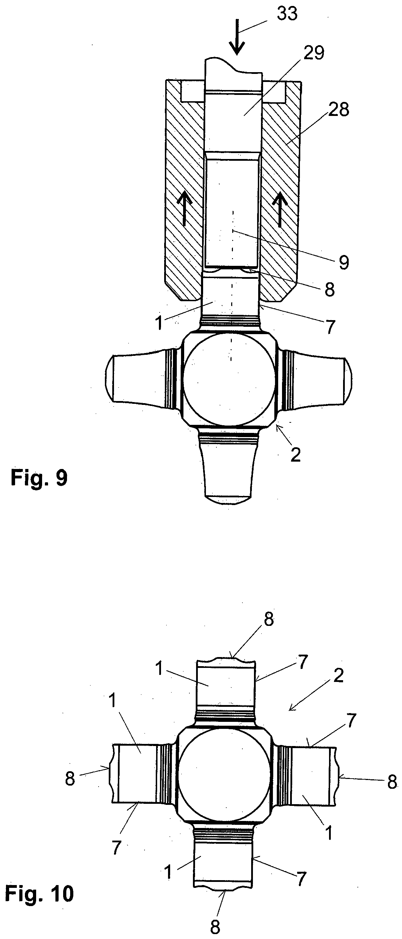

Nach dem Nachpressvorgang durch den Nachbearbeitungsstempel 29 wird die Hülse 28 vom Lagerzapfen 1 abgezogen, vgl. Fig. 9. Das Abziehen der Hülse 28 kann hierbei gegen eine große, dem Abziehen entgegengerichtete Kraft erfolgen, wodurch an der Mantelfläche 7 ein hoher Glättungseffekt bewirkt wird. Mit anderen Worten wird beim Abziehen der Hülse 28 nach dem Nachpressvorgang mit dem Nachbearbeitungsstempel 29 in einer an die Mantelfläche 7 anschließenden Schicht ein Materialfluss von Material des Lagerzapfens 1 bewirkt. Beim Abziehen der Hülse 28 vom Lagerzapfen 1 bleibt der Nachbearbeitungsstempel 29 zunächst noch an das freie Ende des Lagerzapfens 1 angepresst. Die Presskraft kann hierbei niedriger sein als bei der Stauchung des Zapfenendes. Das Anpressen kann hierbei über eine vorgegebene Zeit oder über einen vorgegebenen Weg der Hülse 28 aufrecht erhalten werden und wird günstigerweise beendet, kurz bevor die Hülse 28 vollständig vom Lagerzapfen 1 abgezogen ist. Durch eine gezielte Steuerung der Presskraft in Abhängigkeit von dem Verfahrweg der Hülse 28 beim Abziehen und/oder der Verfahrkraft, die zum Abziehen der Hülse 28 erforderlich ist, kann das Kalibrierergebnis noch verbessert werden.

Das Zapfenkreuz 2 mit den Lagerzapfen 1, die alle in der beschriebenen Weise nachbearbeitet worden sind, ist in Fig. 10 dargestellt.

Falls gewünscht, kann in einem zentralen Bereich der Erhebung 10 bei der Nachbearbeitung eine Vertiefung eingebracht werden, beispielsweise durch eine entsprechende Erhebung in einem zentralen Bereich des Nachbearbeitungsstempels 29.

Nach der beschriebenen Nachbearbeitung sind die formgebenden Bearbeitungsschritte an einem in erfindungsgemäßer Weise ausgebildeten Lagerzapfen 1 mit Vorteil abgeschlossen. Insbesondere sind keine nachgeschalteten Schleifoperationen erforderlich.

Ein erfindungsgemäßer Lagerzapfen kann in der Folge in herkömmlicher Weise gehärtet werden.

Die beschriebene Nachbearbeitung kann auch gleichzeitig für zwei oder mehr Lagerzapfen durchgeführt werden. Insbesondere können sich gegenüberliegende Zapfen, deren Längsmittelachse 9 auf einer Linie liegen, gleichzeitig kalibriert werden, wodurch die Abstützung der Presskräfte besonders vorteilhaft ist.

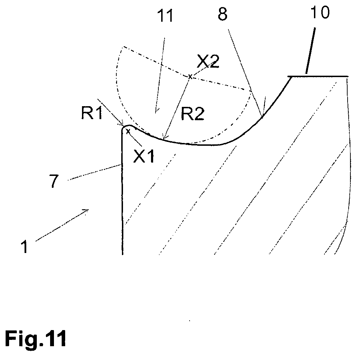

In der Fig. 11 ist eine schematische Darstellung eines konkaven Verlaufes im Funktionsteil 1 veranschaulicht. Aus der Figur ist der Übergangsbereich zwischen der Mantelfläche 7 und der Stirnfläche 8 ersichtlich. Dabei sind im Längsmittelschnitt gesehen im Übergangsbereich zwischen der Mantelfläche 7 der Stirnfläche 8 sowie im daran anschließenden Bereich der Stirnfläche 8 zwei Abschnitte ausgebildet deren Kontur in Radien einbeschrieben werden kann. Der erste Abschnitt kann mit einem ersten Radius R1, dessen erster Radienmittelpunkt X1 innerhalb des Bauteils angeordnet ist, beschrieben werden. Der zweite Abschnitt, der konkave Bereich 11, kann mit einem zweiten Radius R2, dessen Radienmittelpunkt X2 außerhalb des Bauteils angeordnet ist, beschrieben werden. Dabei ist zu bevorzugen, wenn der Wert des ersten Radius R1 kleiner als ein Fünftel, weiter bevorzugt kleiner als ein . Zehntel, des Wertes des zweiten Radius R2 beträgt. Darüberhinaus ist es zu bevorzugen wenn der Wert des zweiten Radius R2 kleiner als das vierhundertfache, bevorzugt kleiner als das zweihundertfache, im Vergleich zum Wert des ersten Radius R1 beträgt.

Anstelle von Zapfenkreuzen 2 können analog zu den beschriebenen Ausführungsbeispielen auch andere Bauteile ausgebildet werden, welche mindestens einen Lagerzapfen 1 aufweisen, beispielsweise Teile mit zwei gegenüberliegenden Lagerzapfen oder Tripoden.

**Legende zu den Hinweisziffern:**

| | | | |
|---|---|---|---|
| 1 | Lagerzapfen | 29 | Nachbearbeitungsstempel |
| 2 | Zapfenkreuz | 30 | Wandoberfläche |
| 3 | Gelenkgabel | 33 | Pfeil |
| 4 | Lagerhülse | 60 | Lagerzapfen |
| 5 | Wälzkörper | 61 | Zapfenkreuz |
| 6 | Lagerabschnitt | 62 | Gelenkgabel |
| 7 | Mantelfläche | 63 | Lagerhülse |
| 8 | Stirnfläche | 64 | Nadel |
| 9 | Längsmittelachse | 65 | Mantelfläche |
| 10 | Erhebung | 66 | Stirnfläche |
| 11 | konkaver Bereich | | |
| 12 | Umfangsrand | | |
| 13 | Vorsprung | | |
| 14 | Presswerkzeug | | |
| 15 | erste Matrize | | |
| 16 | zweite Matrize | | |
| 17 | Bohrung | | |
| 18 | Bohrung | | |
| 19 | Rohling | | |
| 20 | Aussparung | | |
| 21 | Aussparung | | |
| 22 | Fließpressstempel | | |
| 23 | Fließpressstempel | | |
| 24 | Trägerplatte | | |
| 25 | Trägerplatte | | |
| 26 | Druckfeder | | |
| 27 | Druckfeder | | |
| 28 | Hülse | | |

## Patentansprüche

1. Verfahren zur Herstellung eines fließgepressten Lagerzapfens (1), der sich in eine Längsrichtung erstreckt und eine Mantelfläche (7), die eine Längsmittelachse (9) des Lagerzapfens (1) umgibt, und eine den Lagerzapfen (1) an einem freien Ende in axialer Richtung begrenzende Stirnfläche (8) aufweist, wobei der Lagerzapfen (1) in einem Presswerkzeug mittels mindestens eines Fließpressstempels (22, 23) fließgepresst wird und nach dem Fließpressen des Lagerzapfens (1) eine Nachbearbeitung des Lagerzapfens (1) zur Verbesserung der Zylindrizität des Lagerzapfens (1) zumindest über einen Abschnitt der Längserstreckung des Lagerzapfens (1) durchgeführt wird, wobei der Lagerzapfen (1) bei der Nachbearbeitung zumindest über einen an sein freies Ende anschließenden Abschnitt seiner Längserstreckung in einem Hohlraum angeordnet ist, der in radialer Richtung des Lagerzapfens (1) von einer die Mantelfläche (7) des Lagerzapfens (1) umgebenden Wandoberfläche (30) begrenzt wird, und ein in Längsrichtung des Lagerzapfens (1) verfahrbarer Nachbearbeitungsstempel (29) gegen das freie Ende des Lagerzapfens (1) verfahren und an die Stirnfläche (8) des Lagerzapfens (1) angepresst wird und dadurch eine plastische Verformung des Lagerzapfens (1) mit einem Materialfluss von Material des Lagerzapfens (1) bewirkt wird, **dadurch gekennzeichnet, dass** der Lagerzapfen (1) nach dem Fließpressen aus dem Presswerkzeug herausgenommen und in Längsrichtung des Lagerzapfens (1) eine Hülse (28) auf den Lagerzapfen (1) aufgeschoben wird, welche die Wandoberfläche (30) aufweist, die die Mantelfläche (7) des Lagerzapfens (1) zumindest über den an das freie Ende des Lagerzapfens (1) anschließenden Abschnitt der Längserstreckung des Lagerzapfens (1) umgibt, dass nach der plastischen Verformung des Lagerzapfens (1) mittels des Nachbearbeitungsstempels (29) beim Abziehen der Hülse (28) vom Lagerzapfen (1) in Längsrichtung des Lagerzapfens (1) von der Hülse (28) ein Materialfluss von Material des Lagerzapfens (1) bewirkt wird, wobei der Nachbearbeitungsstempel (29) zumindest so lange an die Stirnfläche (8) des Lagerzapfens (1) angepresst wird, bis die Hülse (28) zum Teil vom Lagerzapfen (1) abgezogen ist.

2. Verfahren nach Anspruch 1, **dadurch gekennzeichnet, dass** beim Aufschieben der Hülse (28) auf den Lagerzapfen (1) von der Hülse (28) ein Materialfluss von Material des Lagerzapfens (1) bewirkt wird.

3. Lagerzapfen, durch das Verfahren gemäß einem der Ansprüche 1-2 hergestellt, der sich in eine Längsrichtung erstreckt und eine Mantelfläche (7), die eine Längsmittelachse (9) des Lagerzapfens (1) umgibt, und eine den Lagerzapfen (1) an einem freien Ende des Lagerzapfens (1) in axialer Richtung begrenzende Stirnfläche (8) aufweist und dessen Mantelfläche (7) zumindest über einen Abschnitt der Längserstreckung des Lagerzapfens (1) zumindest im Wesentlichen zylindrisch ausgebildet ist, **dadurch gekennzeichnet, dass** die Stirnfläche eine in Längsrichtung des Lagerzapfens (1) vorspringende Erhebung (10) und einen die Erhebung (10) umgebenden konkaven Bereich (11) aufweist.

4. Lagerzapfen nach Anspruch 3, **dadurch gekennzeichnet, dass** der konkave Bereich (11) die Erhebung (10) ringförmig vollständig umgibt.

5. Lagerzapfen nach Anspruch 3 oder 4, **dadurch gekennzeichnet, dass** die Stirnfläche (8) im konkaven Bereich (11) eine Vertiefung gegenüber einem Umfangsrand (12) der Stirnfläche (8) aufweist.

6. Lagerzapfen nach einem der Ansprüche 3 bis 5, **dadurch gekennzeichnet, dass** der Lagerzapfen (1) Teil eines Zapfenkreuzes (2) für ein Kardangelenks ist.

## Claims

1. Method for producing an extruded bearing journal (1), which extends in a longitudinal direction and which has a lateral surface (7) surrounding a longitudinal central axis (9) of the bearing journal (1) and has a face surface (8) delimiting the bearing journal (1) in an axial direction at a free end, wherein the bearing journal (1) is extruded in an extrusion tool by means of at least one extrusion punch (22, 23) and, after the extrusion of the bearing journal (1), reworking of the bearing journal (1) is performed in order to improve the cylindricity of the bearing journal (1) at least over a section of the longitudinal extent of the bearing journal (1), wherein, during the reworking, the bearing journal (1) is arranged, at least over a section of its longitudinal extent adjoining its free end, in a cavity that is delimited in a radial direction of the bearing journal (1) by a wall surface (30) surrounding the lateral surface (7) of the bearing journal (1), and a reworking punch (29) which is movable in the longitudinal direction of the bearing journal (1) is moved toward the free end of the bearing journal (1) and is pressed against the face surface (8) of the bearing journal (1) and, in this way, a plastic deformation of the bearing journal (1), with a flow of material of the bearing journal (1), is effected, **characterized in that**, after the extrusion, the bearing journal (1) is removed from the pressing tool and a sleeve (28) is pushed onto the bearing journal (1) in a longitudinal direction of the bearing journal (1), which sleeve has the wall surface (30) that surrounds the lateral surface (7) of the bearing journal (1) at least over that section of the longitudinal extent of the bearing journal (1) which adjoins the free end of the bearing journal (1), **in that**, after the plastic deformation of the bearing journal (1) by means of the reworking punch (29), as the sleeve (28) is pulled off the bearing journal (1) in the longitudinal direction of the bearing journal (1), a flow of material of the bearing journal (1) is effected by the sleeve (28), wherein the reworking punch (29) is pressed against the face surface (8) of the bearing journal (1) at least until the sleeve (28) has been partially pulled off the bearing journal (1).

2. Method according to Claim 1, **characterized in that**, as the sleeve (28) is pushed onto the bearing journal (1), a flow of material of the bearing journal (1) is effected by the sleeve (28).

3. Bearing journal, produced by the method according to one of Claims 1-2, which extends in a longitudinal direction and which has a lateral surface (7) surrounding a longitudinal central axis (9) of the bearing journal (1) and has a face surface (8) delimiting the bearing journal (1) in an axial direction at a free end of the bearing journal (1) and the lateral surface (7) of which is at least substantially of cylindrical form at least over a section of the longitudinal extent of the bearing journal (1), **characterized in that** the face surface has an elevation (10) projecting in a longitudinal direction of the bearing journal (1) and has a concave region (11) surrounding the elevation (10).

4. Bearing journal according to Claim 3, **characterized in that** the concave region (11) completely surrounds the elevation (10) in annular fashion.

5. Bearing journal according to Claim 3 or 4, **characterized in that** the face surface (8) has, in the concave region (11), a recess in relation to a circumferential edge (12) of the face surface (8).

6. Bearing journal according to one of Claims 3 to 5, **characterized in that** the bearing journal (1) is part of a Cardan spider (2) for a Cardan joint.

## Revendications

1. Procédé de fabrication d'un tourillon forgé (1), qui s'étend dans une direction longitudinale et qui présente une face latérale (7), qui entoure un axe central longitudinal (9) du tourillon (1), et une face frontale (8) limitant le tourillon (1) à une extrémité libre en direction axiale, dans lequel on forge le tourillon (1) dans un outil de presse au moyen d'au moins un poinçon de presse (22, 23) et on exécute après le forgeage du tourillon (1) un traitement de finition du tourillon (1) pour améliorer la cylindricité du tourillon (1) au moins sur une partie de l'extension longitudinale du tourillon (1), dans lequel le tourillon (1) est disposé lors du traitement de finition, au moyen d'une partie de son extension longitudinale se raccordant à son extrémité libre, dans une cavité, qui est limitée dans la direction radiale du tourillon (1) par une surface de paroi (30) entourant la face latérale (7) du tourillon (1), et un poinçon de traitement de finition (29) déplaçable dans la direction longitudinale du tourillon (1) est déplacé contre l'extrémité libre du tourillon (1) et est pressé sur la face frontale (8) du tourillon (1) et on provoque ainsi une déformation plastique du tourillon (1) avec un écoulement de matière du matériau du tourillon (1), **caractérisé en ce que** l'on retire le tourillon (1) hors de l'outil de presse après le forgeage et on glisse sur le tourillon (1), dans la direction longitudinale du tourillon (1), une douille (28) qui présente la surface de paroi (30), qui entoure la face latérale (7) du tourillon (1) au moins sur la partie de l'extension longitudinale du tourillon (1) se raccordant à l'extrémité libre du tourillon (1), **en ce qu'**après la déformation plastique du tourillon (1) on provoque avec la douille (28) un écoulement de matière du matériau du tourillon (1) au moyen du poinçon de traitement de finition (29) lors du retrait de la douille (28) du tourillon (1) dans la direction longitudinale du tourillon (1), dans lequel on presse le poinçon de traitement de finition (29) sur la face frontale (8) du tourillon (1) au moins jusqu'à ce que la douille (28) soit en partie retirée du tourillon (1).

2. Procédé selon la revendication 1, **caractérisé en ce que** l'on provoque avec la douille (28) un écoulement de matière du matériau du tourillon (1) lors du glissement de la douille (28) sur le tourillon (1).

3. Tourillon, fabriqué par le procédé selon une des revendications 1 ou 2, qui s'étend dans une direction longitudinale et qui présente une face latérale (7), qui entoure un axe central longitudinal (9) du tourillon (1), et une face frontale (8) limitant le tourillon (1) à une extrémité libre du tourillon (1) en direction axiale, et dont la face latérale (7) est de forme essentiellement cylindrique au moins sur une partie de l'extension longitudinale du tourillon (1), **caractérisé en ce que** la face frontale présente une protubérance (10) saillante dans la direction longitudinale du tourillon (1) et une région concave (11) entourant la protubérance (10).

4. Tourillon selon la revendication 3, **caractérisé en ce que** la région concave (11) entoure entièrement sous forme annulaire la protubérance (10).

5. Tourillon selon la revendication 3 ou 4, **caractérisé en ce que** la face frontale (8) présente dans la région concave (11) un creux par rapport à un bord périphérique (12) de la face frontale (8).

6. Tourillon selon une des revendications 3 à 5, **caractérisé en ce que** le tourillon (1) est une partie d'un croisillon de cardan (2) pour une articulation à cardan.
